# EUROPEAN PATENT SPECIFICATION

(11) **EP 1 681 378 B1**
(45) Date of publication and mention of the grant of the patent: **31.12.2008**
(21) Application number: 06250221.6
(22) Date of filing: 17.01.2006
(51) Int. Cl.: D02G 3/12

(54) **Metal fiber yarn and fabric comprising metal fiber yarn**
Metallfasergarn und Metallfasergarn enthaltender Stoff
Fil de fibres métalliques et étoffe contenant des fils de fibres métalliques

(30) Priority: 17.01.2005 KR 2005004249
(43) Date of publication of application: 19.07.2006
(73) Proprietor: Fiber Tech Co., Ltd., Tanhyun-myun Pajoo, Kyungki-do (KR)
(72) Inventor: Hyun, Jin Gook, Soosung-gu, Daegu (KR); Jung, Jin Ik, Younsoo-gu, Icheon (KR); Park, Man Ho, Kangseo-gu (KR); Won, Jun Hee, Seodaemoon-gu, Seoul (KR); Lee, Deck Yui, Koyang, Kyungki-do (KR)
(74) Representative: Powell, Timothy John

(56) References cited:
- US-A- 6 025 282
- US-A1- 2004 147 193
- US-B1- 6 289 702
- US-B1- 6 604 570

## Description

### BACKGROUND OF THE INVENTION

### 1. Field of the invention

The present invention relates to a metal fiber yarn, a fabric comprising the metal fiber yarn, a method for manufacturing the fabric, and a membrane for a surface combustion burner using the fabric. More particularly, the present invention pertains to a metal fiber yarn, which can be used for manufacturing a membrane for a surface combustion burner having a wide combustion range and high porosity, a fabric comprising the metal fiber yarn, a method for manufacturing the fabric, and the use of the fabric as a membrane for the surface combustion burner.

### 2. Description of the Prior Art

Generally, a surface combustion burner is produced using a porous metal fiber membrane (media), and mixture gas of fuel and air is combusted on the surface of the porous metal fiber membrane. The membrane for the surface combustion burner is heated at a high temperature of 1000°C or more, thus it is produced using a heat-resistant metal or ceramic fiber.

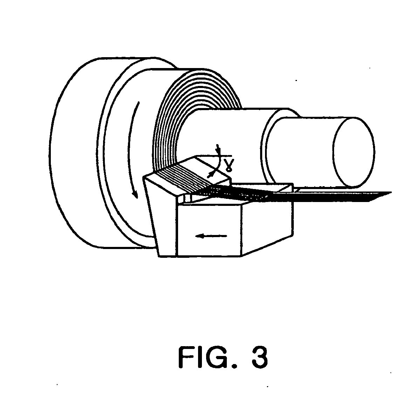

With respect to a conventional technology, which relates to a metal fiber used for a porous gas burner membrane and to the membrane produced using the metal fiber, US 2003/138629 discloses a method of producing a gas burner membrane using yarns comprising metal fibers, and a fabric comprising the yarns. The machined metal fiber bundle is surrounded by polymers or natural fibers, and is consolidated with each other using a binding agent. After the fabric is produced using the metal fiber yarn, the binding agent and the polymers or the natural fibers are removed from the fabric. The method of producing the yarns by surrounding the metal fibers using the binding agent and the polymers or the natural fibers as disclosed in the above PCT patent is frequently employed to produce a yarn using metal fibers produced through a machining process. As known in the art, the metal fibers, which are mechanically processed using devices shown in FIGS. 3 to 4, have a predetermined orientation after the machining is finished, and are a bundle of the metal fibers having a desired diameter due to a fine drafting process.

US 7,053,014 discloses a burner membrane produced using a fabric which contains at least 60 wt% of machined metal fiber bundle having a bundle voluminousity in the range of 1 - 15 % and a torsion ratio of 10 - 80 turns/m.

Furthermore, US 6,025,282 discloses a fabric and a membrane for a gas burner produced using the fabric. In the patent, metal filaments, which are produced through a machining process such as USP No. 4,930,199 and have an equivalent filament diameter of 15 - 150 *µ*m, are parallelly combined with each other without a twisting operation using a binding agent to form bundles of filaments, and the bundles of filaments are woven or knitted to produce the fabric.

However, the above PCT patent is problematic in that, since metal fibers, which are produced through a machining process according to U.S. Pat. Nos. 4,930,199 and 5,071,713, are unidirectionally oriented and the bundle of metal fibers includes the predetermined number of metal fibers, it is difficult to produce a porous membrane for a combustion burner when lengths of the fibers are short or fiber distribution is unparallel or nonuniform.

### SUMMARY OF THE INVENTION

Therefore, the present inventors have conducted extensive studies into production of a metal fiber yarn having a unidirectional orientation from metal fibers, which have a nonuniform distribution or are randomly oriented, thereby accomplishing the present invention.

An object of the present invention is to provide a metal fiber yarn having a unidirectional orientation, which is used as a membrane for a surface combustion burner having high porosity and a wide combustion range, and is produced using randomly oriented metal fibers manufactured by a melt extraction method.

Another object of the present invention is .to provide a fabric produced using the metal fiber yarn.

A further object of the present invention is to provide a method for manufacturing the fabric using the metal fiber yarn.

Yet another object of the present invention is to provide the membrane for the surface combustion burner having uniform combustion efficiency and high porosity.

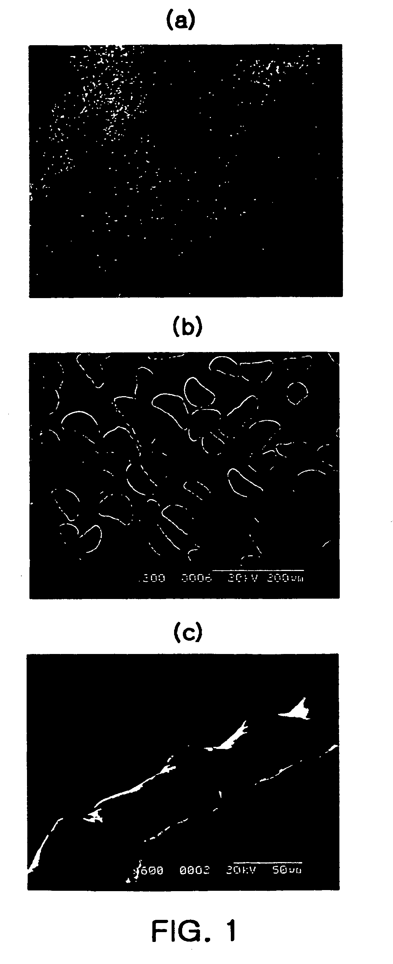

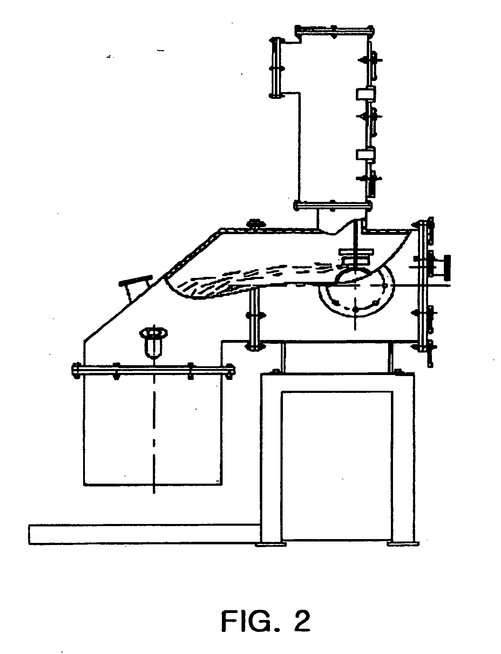

According to an aspect of the present invention, there is provided a metal fiber yarn having a length of 0.45 -0.6 m/g and a torsion ratio of 1 - 9 turns/m. The metal fiber yarn comprises 50 - 100 unidirectionally oriented metal fibers, which are prepared by combing randomly oriented metal fibers as shown in Fig. 1(a), manufactured by an apparatus used in a melt extraction method as shown in FIG. 2. Each of the metal fibres has a crescent section, a length of 10 - 20 cm and a protrusion that protrudes by a height of 1 - 5 µm from a surface thereof.

According to another aspect of the present invention, there is provided a fabric produced using the metal fiber yarn.

According to a further aspect of the present invention, there is provided a method for manufacturing the fabric. The method comprises combing randomly oriented metal fibers, which are produced through a melt extraction method, to prepare unidirectionally oriented metal fibers; producing a metal fiber yarn, and producing the fabric using the metal fiber yarn. The metal fiber yarn consists of 50 - 100 unidirectionally oriented metal fibers and has a length of 0.45 - 0.6 m/g and a torsion ratio of 1 - 9 turns/m and each of the metal fibres has a crescent section, a length of 10 - 20 cm and a protrusion that protrudes by a height of 1 - 5 µm from a surface thereof.

According to still another aspect of the present invention, there is provided a surface combustion burner membrane having high porosity and high combustion efficiency, which is produced using the fabric.

### BRIEF DESCRIPTION OF THE DRAWINGS

The above and other objects, features and other advantages of the present invention will be more clearly understood from the following detailed description taken in conjunction with the accompanying drawings, in which:
FIG. 1a is a picture showing randomly oriented metal fibers produced through a melt extraction method, FIG. 1b is a SEM (Scanning Electron Microscope) picture (200 X magnification) showing transverse sections, of the metal fibers produced through the melt extraction method, and FIG. 1c is a SEM picture (600 X magnification) showing the longitudinal surface of one metal fiber produced through the melt extraction method;
FIG. 2 schematically illustrates an apparatus used in the melt extraction method;
FIG. 3 schematically illustrates a device used in a cutting method belonging to a conventional machining process;
FIGS. 4a to 4c schematically illustrates a drawing method belonging to the conventional machining process;
FIG. 5 is a SEM picture (500 X magnification) showing longitudinal surfaces of metal fibers produced through the conventional machining method;
FIG. 6 is a SEM picture (50 X magnification) showing transverse sections of metal fibers produced through the conventional cutting method;
FIG. 7 is a SEM picture (1000 X magnification) showing transverse sections of metal fibers produced through the conventional drawing method;
FIG. 8 illustrates a metal fiber yarn according to the present invention;
FIG. 9 is a picture of a fabric produced by weaving the metal fiber yarns according to the present invention;
FIGS. 10a and 10b illustrate lower and upper sides, respectively, of a fabric in which slit-type flame holes are formed, according to the present invention;
FIG. 11 is a picture of a fabric produced by knitting metal fiber yarns according to the present invention;
FIG. 12 illustrates pictures of flames having a calorific value of 418 KW/m² during combustion using a membrane for a combustion burner according to the present invention; and
FIG. 13 illustrates pictures of flames having a calorific value of 1063 KW/m² during combustion using the membrane for the combustion burner according to the present invention.

### DETAILED DESCRIPTION OF THE INVENTION

Hereinafter, a detailed description will be given of the present invention.

A metal fiber yarn according to the present invention comprises metal fibers which are produced through a melt extraction method and have a crescent section, a diameter of 20 - 70 µm and a length of 10 - 20 cm. When the diameter is less than 20 µm, undesirably, the fibers are easily broken while they are combed. When the diameter is more than 70 µm, it is impossible to desirably produce the yarn because the number of the fibers constituting the yarn is small. When the length of the fiber is less than 10 cm, undesirably, it is difficult to produce the yarn because of the short length. It is difficult to produce a metal fiber that is longer than 20 cm and the diameter is 20 - 70 µm, through the melt extraction method.

In the melt extraction method as described in U.S. Pat. No. 6,604,570, which has been made by the applicant of the present invention, a cylindrical rod having a diameter of 12 mm is provided at an induction coil as a melting unit and is melted at an end thereof using an apparatus of FIG. 2 according to the present invention. The molten portion of the rod comes into contact with a disk, which rotates at a high speed of 1 - 100 m/sec, to instantaneously produce metal fibers having a diameter of 20 - 70 µm. The metal fibers each have a crescent section as shown in FIG. 1b, and a plurality of protrusions which protrude by a height of 1 - 5 µm from a longitudinal surface thereof as shown in FIG. 1c. Each metal fiber, which is produced through the melt extraction method, has protrusions having heights of micron units, thus falling-out of the metal fiber is prevented in the course of producing the yarn. Accordingly, it is possible to easily produce the yarn using the metal fibers of the present invention in comparison with metal fibers produced through a conventional machining process.

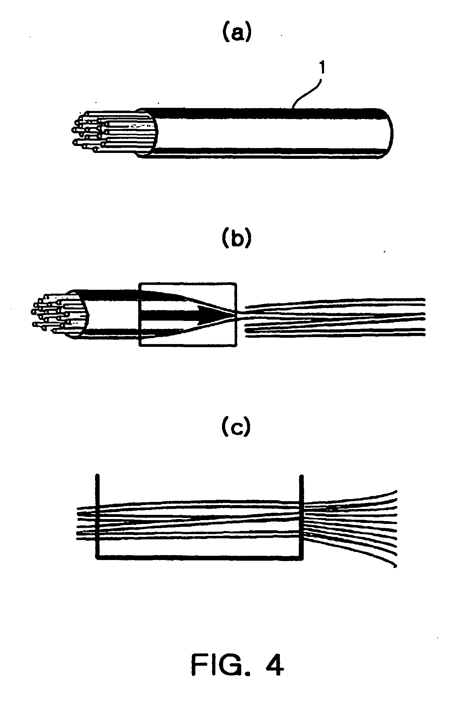

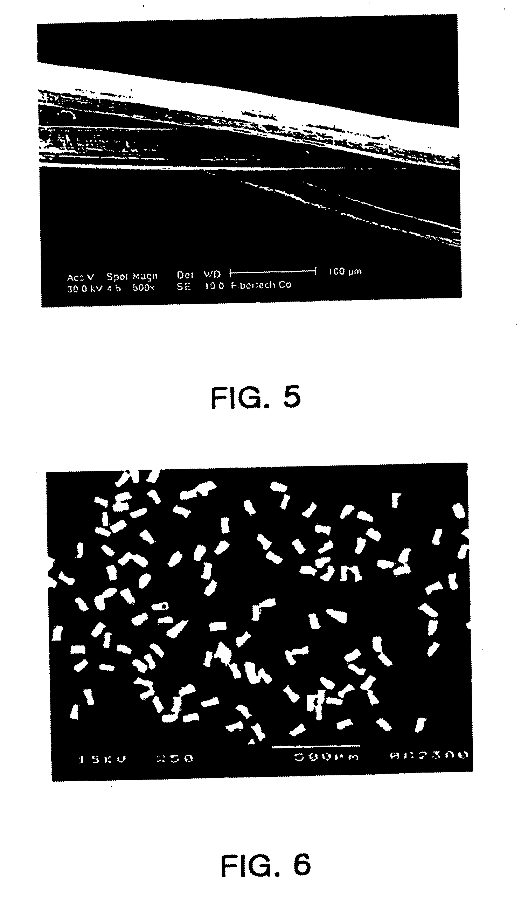

Typically, a cutting method and a drawing method are employed to produce a fine metal fiber through the machining process. In the cutting method, a metal sheet is wound like a coil as shown in FIG. 3, and a section of the wound metal sheet is cut to produce metal fibers. In the drawing method, after a plurality of surface-treated wires is firstly drawn, the firstly drawn wires are collected in a protection pipe 1 as shown in FIG. 4a, and secondly drawn as shown in FIG. 4b. The drawing is repeated a predetermine number of times, and the protection pipe is melted to produce metal fibers as shown in FIG. 4c. However, these machining processes are different from the melt extraction method in that metal is repeatedly mechanically processed at a temperature that is lower than a melting point thereof to produce the fine fiber and each metal fiber manufactured by the.machining process has a smooth surface without the protrusions as shown in FIG. 5.

Improved Fecralloy^{®}, which contains an iron-chromium-aluminum-based alloy as a main component, and 0.05 -0.5 wt%, preferably 0.1 - 0.3 wt%, Zr is used to produce the metal fibers of the present invention. When a fabric, which includes Fecralloy^{®} containing Zr in the above amount, is used as a membrane, an oxidation life is excellent. Typical Fecralloy^{®} is used in the present invention, and it comprises, for example, 70 - 83 wt% iron (Fe), 18 - 27 wt% chromium (Cr) , 3 - 7 wt% aluminum (Al) , and 0.05 -0.5 wt% zirconium (Zr).

The metal fiber yarn according to the present invention is produced using randomly oriented metal fibers which are produced using Fecralloy^{®} through the melt extraction method.

The fine metal fibers produced through the melt extraction method are randomly distributed with each other as shown in FIG. 1a, and it is necessary to orient the fibers to produce the yarn. The randomly oriented mental fibers may be continuously combed many times in order to arrange the metal fibers parallel to one another. The orientation is repeated until the one yarn consists of about 50 - 100. metal fibers. When the number of fibers is less than 50, they become tangled because the number of fibers constituting the one yarn is small, thus it is difficult to desirably produce the yarn. When the number of fibers is more than 100, breathability is reduced and an intensity change range is narrow during combustion, thus gas is undesirably discharged. With respect to this, the metal fiber has a diameter of 20 - 70 µm and a length of 10 - 20 cm.

Furthermore, the yarn is produced so as to have a' length of 0.45-0.6m/g (0.45-0.6 Nm) and a torsion ratio of 1 - 9 turns/m. If the length per gram is less than 0.45, the yarn is thick, and thus, undesirably, porosity is reduced. If the length per gram is more than 0.6, the yarn is thin, thus it is difficult to maintain the thickness of the yarn.

Additionally, when the yarn is used as a membrane for a burner, the yarn has a predetermined torsion ratio so that the metal fibers do not fall out from the yarn while gas fuel is easily discharged between the metal fibers. In other words, if the torsion ratio is more than 9 turns/m the metal fibers are densely arranged in the metal fiber yarn due to a characteristic of the metal fibers produced through the melt extraction method, thus it is difficult to conduct the discharge of the fuel gas. If the torsion ratio is less than 1, turn/m, the metal fibers easily fall out of the yarn, thus it is difficult to desirably produce the yarn.

The metal fiber yarn of the present invention is produce by means of a twisting operation and has the torsion ratio of 1 - 9 turns/m. Hence, the metal fibers are not removed from the yarn and the shape of the yarn is maintained, thus it is easy to produce a fabric using the yarn. Furthermore, in order to reinforce the maintenance of the shape of the yarn, the yarn can further comprise polymer or natural fibers, which are disposed in nearly parallel arrangement in the yarn. The polymer fibers may be polyamide fibers, polyester fibers, polyethylene fibers, polypropylene fibers, acrylic fibers and polyvinylalcohol polymers, etc. and natural fibers may be cotton or wool. The weight of polymer or natural fibers in the yarn is less than 15% by weight of the yarn, preferably even less than 10% by weight. The polymer or natural fibers can be removed easily by burning or any other appropriate means.

As well, since fuel gas is easily discharged between the fibers, it is possible to produce the fabric for a surface combustion burner membrane having high porosity and excellent combustion efficiency.

The yarn, in which the metal fibers produced through the melt extraction method are combed, is processed to form a fabric having a density of 1.0 - 4.0 kg/m², and the fabric thus formed is used as the membrane for the porous surface combustion burner.

If the density of the fabric is less than 1.0 kg/m ² since the fabric, in which the yarns having a predetermined thickness are arranged at a wide interval, is produced, discharge of fuel gas is large, thus combustion is insufficiently achieved. If the density is more than 4.0 kg/m², since the interval between the yarns is too narrow, discharge of fuel gas is low, and thus, undesirably, combustion is scarcely achieved. The fabric produced so as to have a density of 1.0 - 4.0 kg/m² is 0.5 - 2.5 mm thick.

Since the fibers produced through the melt extraction method of the present invention are oriented unidirectiionally and twisted to produce the yarn, the fibers do not fall out from the yarn, thus the shape of the yarn is stably maintained. Furthermore, the fabric is produced so that the interval between the yarns is constant, and it is possible to use the fabric as the membrane for the burner having excellent combustion efficiency, combustion range, and porosity.

It should be understood that the term "fabric" used in the present invention is intended to include any fabric produced by weaving or knitting the yarns of the present invention.

Furthermore, according to the present invention, in the fabric, weft and warp are arranged perpendicular to each other, and flame holes, which each have two parallel warps and two parallel wefts as sides thereof, are formed on both sides of the fabric.

The flame holes correspond to sparing recesses on the lower and upper sides of the fabric. The flame holes are formed in the shape of a slit in which a ratio of length to width is 10:1 or less, and preferably, 1:1 - 10:1. If the ratio of length to width is more than 10, since the flame holes must be formed using 3 - 4 lower yarns, undesirably, the fabric is slack. If the slit, in which the ratio of length to width is 10:1 or less, has desirable porosity, it is possible for the fabric including the slit to have any ratio of length to width.

When the fabric of the present invention is used as the membrane for the surface combustion burner, fuel flows through the slit-type flame holes, which are formed by the yarn of the lower side of the membrane, and through fine pores of the fabric into the upper side of the membrane, and combusted at the slit-type flame holes of the upper side. Accordingly, mixture gas is further uniformly distributed. In other words, fuel gas, which is fed to the lower side of the membrane, is divided by the yarns of the lower side of the membrane, and flows through the slit-type flame holes, the fine pores of the fabric, and fine pores between the metal fibers constituting the yarn to the yarn of the upper side of the membrane. At this time, gas spouts through the pores of the membrane and the yarn and through the slit-type flame holes of the upper side of the membrane, and is combusted, thus fuel is uniformly discharged and combusted.

Particularly, since fuel gas spouts little by little through the pores formed between the metal fibers, the flow rate of gas between the metal fibers increases even though a small amount of fuel is fed, thus the combustion is stably achieved. In other words, the fine pores between the fibers act as fine slit-type flame holes, thus a wide combustion characteristic ranging from a high intensity region to a low intensity region is realized. When the density of the fabric is 1.0 - 4.0 kg/m², porosity is 70 - 95 %.

Hereinafter, a detailed description will be given of the present invention, with reference to the accompanying drawings.

Used as a raw material in the present invention, the metal fiber is produced through the melt extraction method using Fecralloy^{®} containing Fe, Cr, Al, and Zr components, and randomly oriented as shown in FIG. 1a. A diameter and a length of the fiber are 20 - 70 µm and 10 - 20 cm, respectively, and a section and a longitudinal surface of the metal fiber are shown in FIGS. 1b and 1c, respectively. The metal fiber produced through the melt extraction method has a crescent section as shown in the picture of FIG. 1b, and the longitudinal surface, on which a plurality of protrusions are formed in a height of 1 - 5 µm, as shown in the picture of FIG. 1c.

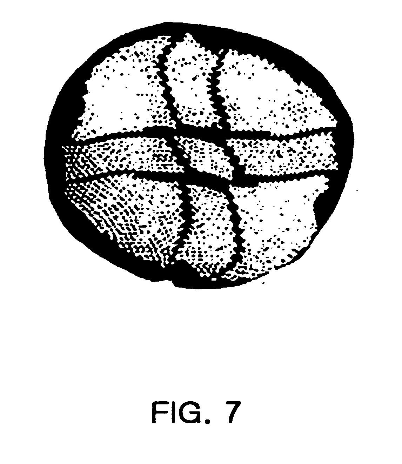

Meanwhile, longitudinal surfaces of metal fibers, which are produced through a machining process, are shown in FIG. 5. The longitudinal surfaces of the metal fibers produced through the machining process are smooth without protrusions as shown in the picture of FIG. 5. Transverse sections of metal fibers, which are produced through a cutting method belonging to the machining process, are shown in FIG. 6. Additionally, during the production of metal fibers through a drawing method, a transverse section of a protection pipe 1 including a plurality of metal fibers of FIG. 4b is shown in FIG. 7. In other words, as shown in FIG. 7, when the metal fibers are produced through the drawing method, the metal fibers are surrounded by a plurality of protection pipes, which is shown in the form of dark boundary lines at the center of FIG. 7.

In the metal fibers produced through the melt extraction method of the present invention, removal of the metal fibers from the metal fiber yarn is prevented due to a plurality of protrusions formed on surfaces of the metal fibers as shown in a picture of FIG. 1c, thus it is possible to easily produce the yarn without using a separate binding agent and/or surrounding or enveloped polymer.

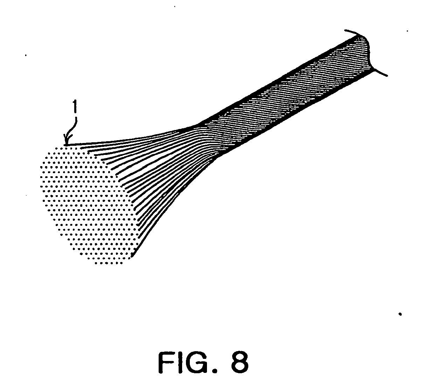

FIG. 8 illustrates the metal fiber yarn according to the present invention. In order to produce the metal fiber yarn of the present invention, the metal fibers 2 are continuously combed many times to be unidirectionally oriented, and 50 - 100 plies of metal fibers 2 are formed into one ply of yarn, thereby preparing the metal fiber yarn. The metal fiber yarn has a length of 0.45 - 0.6 m/g and a torsion ratio of 1 - 9 turns/m. In the metal fiber yarn (FIG. 8) of the present invention having the above torsion ratio range, the metal fibers 2 have not fallen out from the yarn and the shape of the yarn is maintained, thus the production of the fabric is easy. When the fabric thus produced is used as a membrane for a combustion burner, the flow rate of gas in fine gaps between the metal fibers 2 increases even though a small amount of fuel is supplied, thus gas easily sprouts from the yarn and stable combustion is achieved.

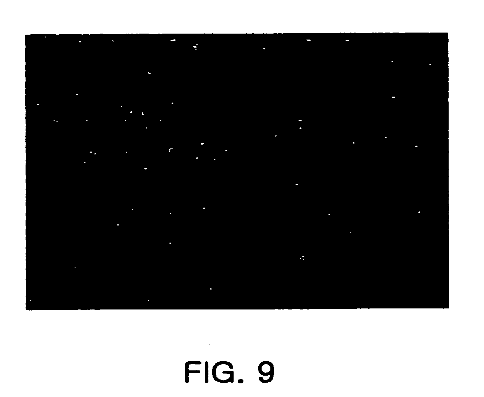

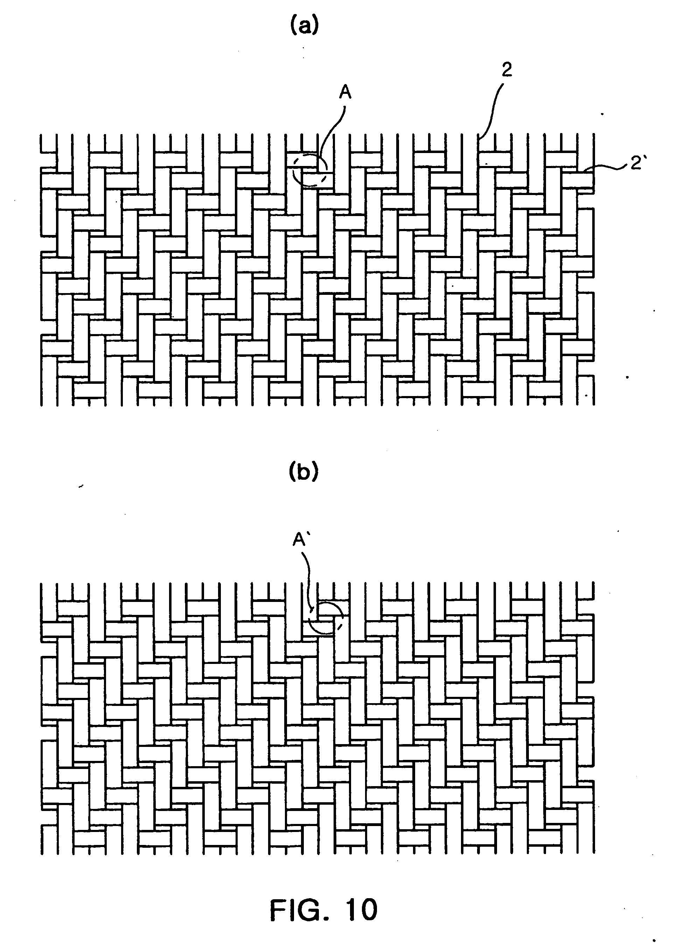

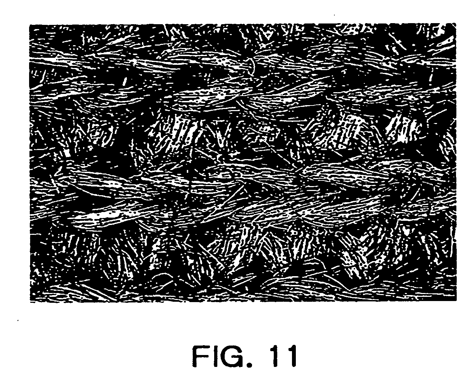

The metal fiber yarn of FIG. 8 is woven or knitted to produce the fabric, and the fabric thus produced is used as the porous membrane for the surface combustion burner. Particularly, a picture of a fabric, which is produced through a weaving process according to the present invention, is shown in FIG. 9, lower and upper sides of the woven fabric (membrane) are shown in FIGS. 10a and 10b, respectively, and a picture of a fabric, which is produced through a knitting process, is shown in FIG. 11. Lower and upper sides of the fabric have the same shape. For convenience of understanding, however, the side of the fabric that directly comes into contact with fuel gas is considered as the lower side (FIG. 10a), and the opposite side of the fabric is considered as the upper side (FIG. 10b).

As shown in FIGS. 10a and 10b, the fabric of the present invention, which is produced through the weaving process, is produced by weaving the metal fiber yarns as warp 3 and weft 3' so that the warp and the weft are arranged perpendicular to each other. Furthermore, the woven fabric has a density of 1.0 - 4.0 kg/m² and a thickness of 0.5 - 2.5 mm.

During the weaving process, flame holes (A, A'), which each have two parallel warps and the two parallel wefts as sides thereof, are formed in the shape of a slit in which a ratio of length to width is 10:1 or less.

A better understanding of the present invention may be obtained through the following examples and a comparative example which are set forth to illustrate, but are not to be construed as the limit of the present invention.

### EXAMPLE 1

A cylindrical rod having a diameter of 12 mm was provided at an induction coil as a melting unit, heated to 1600°C, and was melted at an end thereof using an apparatus of FIG. 2 according to the method of U.S. Pat. No. 6,604,570. The molten portion of the rod came into contact with a disk, which rotated at a high circumferential speed of 20 m/sec, to instantaneously produce metal fibers having a diameter of 50 µm. The metal fibers were randomly arranged, and each had a crescent section and a length of about 10 - 18 cm. Components of each metal fiber were 22 wt% chromium, 5.5 wt% aluminum, 0.3 wt% zirconium, and the balance of iron (Fe).

The randomly distributed metal fibers were continuously combed 100 times to be unidirectionally oriented to produce a metal fiber yarn consisting of 80 plies of metal fibers. The yarn thus produced had a length of 0.55 m/g and a torsion ratio of about 8 turns/m.

### EXAMPLE 2

The yarn, which was produced using the metal fibers produced through the melt extraction method as Example 1, was woven to produce a fabric having a density of 1.5 kg/m² and a thickness of 1.5 mm as shown in FIG. 9. As shown in FIGS. 10a and 10b, flame holes were formed on both sides of the fabric in the shape of a slit in which a ratio of length to width was 5:1. Furthermore, the fabric included 14 yarns per inch (5.5 yarns/cm), which each consisted of 80 plies of metal fibers, and porosity of the fabric was 85 %.

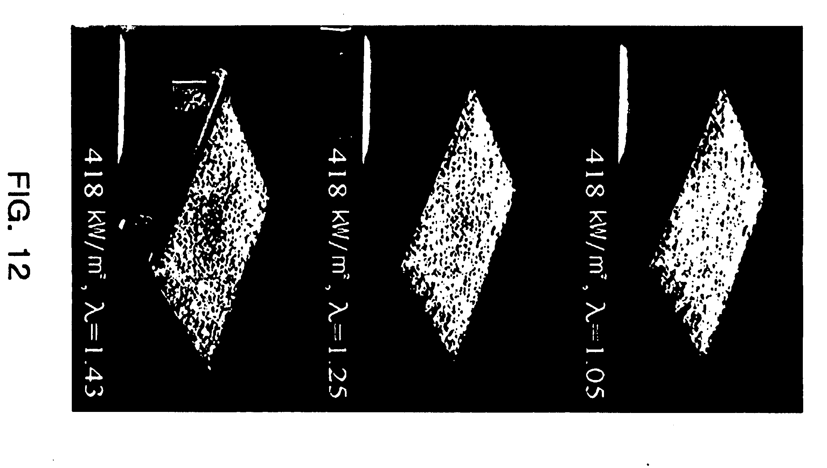

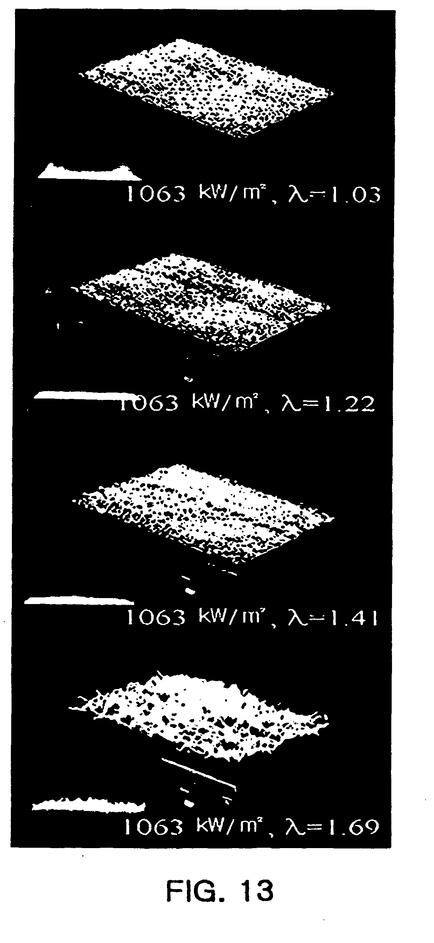

Mixture gas, in which fuel gas was mixed with air in a variable mixing ratio of the following λ, was fed into the fabric, and combustion was conducted. When the combustion was carried out so that the ratio of air to fuel gas (λ: air/fuel gas) was 1.05, 1.25, and 1.42, a calorific value was 418 kW/m². Furthermore, when combustion was implemented so that the ratio of air to fuel gas (λ) was 1.03, 1.22, 1.41, and 1.69, the calorific value was 1,063 kW/m ² Pictures of flames, which changed according to changes in the ratio of air to fuel gas during combustion, are shown in FIGS. 12 and 13. When the fabric of the present invention was used as a membrane for a surface combustion burner, a wide combustion intensity range, at which the ratio of minimum combustion intensity to maximum combustion intensity was 1:2.5, was assured, and it was possible to realize both radiation and transition modes.

For example, when the combustion membrane of the present invention was subjected to combustion characteristic analysis, the calorific value of 200 - 2,000 kW/m² was assured using burners of 20,000 and 50,000 kcal/h. Therefore, it was possible to produce a combustion membrane having the wide combustion intensity range, in which the ratio of minimum calorific value to maximum calorific value was 1:10. A heat capacity (kcal/h) and an intensity capacity (kW/m²) of the burner were easily controlled using parts constituting the burner.

### COMPARATIVE EXAMPLE 1

Metal fibers were produced through a cutting method disclosed in U.S. Pat. No. 4,930,199. A metal sheet, which consisted of 22 wt% chromium, 5.5 wt% aluminum, 0.3 wt% zirconium, and the balance of iron (Fe), and had a thickness of 0.1 mm, was wound around a rotatable shaft like a cylinder as shown in FIG. 3. The metal sheet was cut using a cutter, which moved at a speed of 0.10 mm/min and had a width of 20 mm, at a cutting speed of 72 m/min so that a face angle ( 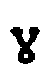 ) between the cutter and the shaft was 32 degree, thereby creating the metal fibers, which each had a rectangular shape having a length of 50 µm and a width of 20 µm. However, the metal fibers, which were produced through the cutting method disclosed in the above U.S. Pat. No. 4,930,199, included fibers having a length of 20 cm or more, and longitudinal surfaces of the fibers were smooth. Accordingly, it was impossible to produce yarn having a low torsion ratio according to the present invention.

When the metal fibers produced through the melt extraction method were used to produce the yarn, the metal fibers did not fall out from the yarn due to the plurality of protrusions formed on the longitudinal surfaces of the metal fibers. On the other hand, when using the metal fibers produced through a machining process, the metal fibers easily fall out of the yarn because the surfaces of the fibers were smooth, thus the shape of the yarn was not maintained.

Since a plurality of protrusions are formed on surfaces of randomly oriented metal fibers, which are produced through a melt extraction method, falling out of the metal fibers from a metal fiber yarn is prevented, thus it is possible to easily produce the yarn. Furthermore, the yarns produced according to the present invention may be woven or knitted to produce a fabric. Particularly, when the yarn is used as a membrane for a burner, fuel uniformly flows from a lower side of the membrane to an upper side of the membrane due to pores formed on lower and upper sides of the fabric, and fine pores between the metal fiber yarns having unidirectional orientation and a predetermined torsion ratio. Accordingly, it is possible to produce a combustion membrane having a wide combustion range in which the ratio of the minimum calorific value to the maximum calorific value is 1:10. Additionally, the membrane of the present invention has excellent combustion efficiency and porosity.

## Claims

1. A metal fiber yarn comprising 50 - 100 unidirectionally oriented metal fibers, wherein said unidirectionally oriented metal fibers are prepared by combing randomly oriented metal fibers manufactured by a melt extraction method, **characterised in that** each of the metal fibers has a crescent section, a length of 10 - 20 cm and a protrusion that protrudes by a height of 1 - 5 µm from a surface thereof; and said metal fiber yarn has a length of 0.45 -0.6 m/g and a torsion ratio of 1 - 9 turns/m.

2. The metal fiber yarn as set forth in claim 1, wherein the metal fibers are made of an iron-chromium-aluminum-based alloy containing 0.05 - 0.5 wt% zirconium.

3. The metal fiber yarn as set forth in claim 2, wherein the metal fibers are made of an iron-chromium-aluminum-based alloy containing 0.1 -0.3 wt% zirconium.

4. The metal fiber yarn as set forth in claim 2, wherein the metal fibers are made of an iron-chromium-aluminum-based alloy containing 70 - 83 wt% iron, 18 - 27 wt% chromium, 3 - 7 wt% aluminum, and 0.05 0.5 wt% zirconium.

5. The metal fiber yarn as set forth in claim 1, wherein a cylindrical rod having a diameter of 12 mm is provided at an induction coil of a melting unit and melted at an end thereof, and a molten portion of the cylindrical rod comes into contact with a disk, which rotates at a high speed of 1 - 100 m/sec, to instantaneously produce the metal fibers having a crescent section in the melt extraction method.

6. The metal fiber yarn as set forth in claim 1, wherein the metal fiber yarn further comprises polymer or natural fibers, which are disposed in nearly parallel arrangement in the yarn.

7. A fabric comprising the metal fiber yarn according to any one of claims 1 to 6.

8. The fabric as set forth in claim 7, wherein the fabric has a density of 1.0 - 4.0 kg/m².

9. The fabric as set forth in claim 7, wherein the fabric is a woven fabric or a knitted fabric.

10. The fabric as set forth in claim 7, wherein the fabric has porosity of 75 - 95 %.

11. The fabric as set forth in claim 7, wherein flame holes are formed in a slit shape, a ratio of length to width of which is 10:1 or less, on lower and upper sides of the fabric.

12. A method for manufacturing a fabric, comprising:
combing randomly oriented metal fibers, which are produced through a melt extraction method, to prepare unidirectionally oriented metal fibers;
producing a metal fiber yarn, which consists of 50-100 unidirectionally oriented metal fibers and has a length of 0.45 - 0.6 m/g; and
producing the fabric using the metal fiber yarn; **characterised in that** the fiber yarn has a torsion ratio of 1 - 9 turns/m, obtained by means of a twisting operation and each of the metal fibers has a crescent section, a length of 10 - 20 cm and a protrusion that protrudes by a height of 1 - 5 µm from a surface thereof.

13. The method as set forth in claim 12, wherein the metal fibers are made of an iron-chromium-aluminum-based alloy containing 0.05 - 0.5 wt% zirconium.

14. The method as set forth in claim 12, wherein a cylindrical rod having a diameter of 12 mm is provided at an induction coil as a melting unit and melted at an end thereof, and a molten portion of the cylindrical rod comes into contact with a disk, which rotates at a high speed of 1 - 100 m/sec, to instantaneously produce the metal fibers having a crescent section in the melt extraction method.

15. The method as set forth in claim 12, wherein the metal fiber yarn further comprises polymer or natural fibers, which are disposed in nearly parallel arrangement in the yarn.

16. The method as set forth in claim 12, wherein the fabric is a woven fabric or a knitted fabric.

17. A membrane for a surface combustion burner using the fabric according to any one of claims 7 to 11.

## Patentansprüche

1. Metallfasergarn mit 50 bis 100 unidirektional ausgerichteten Metallfasen, wobei die unidirektional ausgerichteten Fasern durch Kämmen willkürlich ausgerichteter Metallfasern hergestellt werden, die wiederum in einem Schmelzextraktionsverfahren produziert werden, **dadurch gekennzeichnet, dass** jede der Metallfasern einen halbmondförmigen Abschnitt, eine Länge von 10 bis 20 cm und eine Ausstülpung aufweist, die mit einer Höhe von 1 bis 5 µm von der Oberfläche der Faser hervorsteht, und dass das Metallfasergarn eine Länge von 0,45 bis 0,6 m/g und eine Verdrillung von 1 bis 9 Touren/m aufweist.

2. Metallfasergarn nach Anspruch 1, wobei die Metallfasern aus einer auf Eisen, Chrom und Aluminium basierenden Legierung bestehen, die 0,05 bis 0,5 Gew.% Zirkonium enthält.

3. Metallfasergarn nach Anspruch 2, wobei die Metallfasern aus einer auf Eisen, Chrom und Aluminium basierenden Legierung bestehen, die 0,1 bis 0,3 Gew.% Zirkonium enthält.

4. Metallfasergarn nach Anspruch 2, wobei die Metallfasern aus einer auf Eisen, Chrom und Aluminium basierenden Legierung bestehen, die 70 bis 83 Gew.% Eisen, 18 bis 27 Gew.% Chrom, 3 bis 7 Gew.% Aluminium und 0,05 bis 0,5 Gew.% Zirkonium enthält.

5. Metallfasergarn nach Anspruch 1, wobei an einer Induktionsspule einer Schmelzeinheit ein zylindrischer Stab mit einem Durchmesser von 12 mm bereitgestellt und an seinem einen Ende geschmolzen wird und ein geschmolzener Abschnitt des zylindrischen Stabs in Berührung mit einer Scheibe kommt, die sich mit einer hohen Geschwindigkeit von 1 bis 100 m/s dreht, um in dem Schmelzextraktionsverfahren unmittelbar die Metallfasern mit einem halbmondförmigen Abschnitt zu produzieren.

6. Metallfasergarn nach Anspruch 1, wobei das Metallfasergarn ferner ein Polymer oder Naturfasern umfasst, die in nahezu paralleler Anordnung in dem Garn angeordnet sind.

7. Struktur, die das Metallfasergarn nach einem der Ansprüche 1 bis 6 umfasst.

8. Struktur nach Anspruch 7, wobei die Struktur eine Dichte von 1,0 bis 4,0 kg/m² aufweist.

9. Struktur nach Anspruch 7, wobei die Struktur ein Gewebe oder ein Gewirk ist.

10. Struktur nach Anspruch 7, wobei die Struktur eine Porosität von 75 bis 95 % aufweist.

11. Struktur nach Anspruch 7, wobei auf der Unter- und der Oberseite der Struktur Flammlöcher in Schlitzform gebildet sind, deren Verhältnis von Länge zu Breite 10:1 oder weniger beträgt.

12. Verfahren zur Herstellung einer Struktur, Folgendes umfassend:
Kämmen willkürlich ausgerichteter Metallfasern, die in einem Schmelzextraktionsverfahren produziert werden, um unidirektional ausgerichtete Metallfasern herzustellen,
Produzieren eines Metallfasergarns, das aus 50 bis 100 unidirektional ausgerichteten Metallfasern besteht und eine Länge von 0,45 bis 0,6 m/g aufweist und
Produzieren der Struktur unter Verwendung des Metallfasergarns, **dadurch gekennzeichnet, dass** das Fasergarn eine Verdrillung von 1 bis 9 Touren/m aufweist und jede der Metallfasern einen halbmondförmigen Abschnitt, eine Länge von 10 bis 20 cm und eine Ausstülpung aufweist, die mit einer Höhe von 1 bis 5 µm von der Oberfläche der Faser hervorsteht.

13. Verfahren nach Anspruch 12, wobei die Metallfasern aus einer auf Eisen, Chrom und Aluminium basierenden Legierung bestehen, die 0,05 bis 0,5 Gew.% Zirkonium enthält.

14. Verfahren nach Anspruch 12, an einer Induktionsspule einer Schmelzeinheit ein zylindrischer Stab mit einem Durchmesser von 12 mm bereitgestellt und an seinem einen Ende geschmolzen wird und ein geschmolzener Abschnitt des zylindrischen Stabs in Berührung mit einer Scheibe kommt, die sich mit einer hohen Geschwindigkeit von 1 bis 100 m/s dreht, um in dem Schmelzextraktionsverfahren unmittelbar die Metallfasern mit einem halbmondförmigen Abschnitt zu produzieren.

15. Verfahren nach Anspruch 12, wobei das Metallfasergarn ferner ein Polymer oder Naturfasern umfasst, die in nahezu paralleler Anordnung in dem Garn angeordnet sind.

16. Verfahren nach Anspruch 12, wobei die Struktur ein Gewebe oder ein Gewirk ist.

17. Membran für einen Brenner zur Oberflächenverbrennung, die die Struktur nach einem der Ansprüche 7 bis 11 verwendet.

## Revendications

1. Fil de fibres de métal comprenant de 50 à 100 fibres de métal orientées de manière unidirectionnelle, dans lequel lesdites fibres de métal orientées de manière unidirectionnelle sont préparées par peignage de fibres de métal orientées de manière aléatoire fabriquées par un procédé d'extraction-fusion, **caractérisé en ce que** chacune des fibres de métal a une section en croissant, une longueur de 10 à 20 cm et une protubérance qui fait saillie d'une hauteur de 1 à 5 µm depuis la surface de celle-ci, et ledit fil de fibres de métal a une longueur de 0,45 à 0,6 m/g et un rapport de torsion de 1 à 9 tours/m.

2. Fil de fibres de métal selon la revendication 1, dans lequel les fibres de métal sont constituées d'un alliage à base de fer-chrome-aluminium contenant de 0,05 à 0,5 % en poids de zirconium.

3. Fil de fibres de métal selon la revendication 2, dans lequel les fibres de métal sont constituées d'un alliage à base de fer-chrome-aluminium contenant de 0,1 à 0,3 % en poids de zirconium.

4. Fil de fibres de métal selon la revendication 2, dans lequel les fibres de métal sont constituées d'un alliage à base de fer-chrome-aluminium contenant de 70 à 83 % en poids de fer, de 18 à 27 % en poids de chrome, de 3 à 7 % en poids d'aluminium, et de 0,05 à 0,5 % en poids de zirconium.

5. Fil de fibres de métal selon la revendication 1, dans lequel une tige cylindrique ayant un diamètre de 12 mm est disposée au niveau d'une bobine d'induction d'une unité de fusion et fondue à une extrémité de celle-ci, et une partie fondue de la tige cylindrique entre en contact avec un disque, qui tourne à une vitesse élevée de 1 à 100 m/s, pour produire instantanément les fibres de métal ayant une section en croissant dans le procédé d'extraction-fusion.

6. Fil de fibres de métal selon la revendication 1, dans lequel le fil de fibres de métal comprend en outre des fibres de polymère ou naturelles, qui sont disposées dans un agencement pratiquement parallèle dans le fil.

7. Textile comprenant le fil de fibres de métal selon l'une quelconque des revendications 1 à 6.

8. Textile selon la revendication 7, dans lequel le textile a une masse volumique de 1,0 à 4,0 kg/m².

9. Textile selon la revendication 7, dans lequel le textile est un textile tissé ou un textile tricoté.

10. Textile selon la revendication 7, dans lequel le textile a une porosité de 75 à 95 %.

11. Textile selon la revendication 7, dans lequel des trous de flamme sont formés en forme de fente, un rapport de la longueur à la largeur de ceux-ci étant de 10:1 ou moins, sur les côtés inférieur et supérieur du textile.

12. Procédé pour fabriquer un textile, comprenant :
le peignage de fibres de métal orientées de manière aléatoire, qui sont produites à l'aide d'un procédé d'extraction-fusion, pour préparer des fibres de métal orientées de manière unidirectionnelle ;
la production d'un fil de fibres de métal, qui est constitué de 50 à 100 fibres de métal orientées de manière unidirectionnelle et a une longueur de 0,45 à 0,6 m/g ; et
la production du textile en utilisant le fil de fibres de métal ;
**caractérisé en ce que** le fil de fibres a un rapport de torsion de 1 à 9 tours/m, obtenu au moyen d'une opération de torsion et chacune des fibres de métal a une section en croissant, une longueur de 10 à 20 cm et une protubérance qui fait saillie d'une hauteur de 1 à 5 µm depuis la surface de celle-ci.

13. Procédé selon la revendication 12, dans lequel les fibres de métal sont constituées d'un alliage à base de fer-chrome-aluminium contenant de 0,05 à 0,5 % en poids de zirconium.

14. Procédé selon la revendication 12, dans lequel une tige cylindrique ayant un diamètre de 12 mm est disposée au niveau d'une bobine d'induction d'une unité de fusion et fondue à une extrémité de celle-ci, et une partie fondue de la tige cylindrique entre en contact avec un disque, qui tourne à une vitesse élevée de 1 à 100 m/s, pour produire instantanément les fibres de métal ayant une section en croissant dans le procédé d'extraction-fusion.

15. Procédé selon la revendication 12, dans lequel le fil de fibres métalliques comprend des fibres de polymère ou naturelles, qui sont disposées dans un agencement pratiquement parallèle dans le fil.

16. Procédé selon la revendication 12, dans lequel le textile est un textile tissé ou un textile tricoté.

17. Membrane pour un brûleur à combustion de surface utilisant le textile selon l'une quelconque des revendications 7 à 11.
